# EUROPÄISCHE PATENTSCHRIFT

(11) **EP 1 319 205 B1**
(45) Veröffentlichungstag und Bekanntmachung des Hinweises auf die Patenterteilung: **20.10.2004**
(21) Anmeldenummer: 01962646.4
(22) Anmeldetag: 16.08.2001
(51) Int. Cl.: G05D 16/00, F02M 61/00, F02M 61/16

(54) **DRUCKREGLER**
PRESSURE REGULATOR
REGULATEUR DE PRESSION

(30) Priorität: 21.09.2000 DE 10046736
(43) Veröffentlichungstag der Anmeldung: 18.06.2003
(73) Patentinhaber: SIEMENS AKTIENGESELLSCHAFT, 80333 München (DE)
(72) Erfinder: KORST, Otto, 56414 Herschbach (DE); ECK, Karl, 60318 Frankfurt (DE)
(86) Internationale Anmeldenummer: PCT/DE2001/003135
(87) Internationale Veröffentlichungsnummer: WO 2002/025392

(56) Entgegenhaltungen:
- EP-A- 0 314 878
- US-A- 4 646 700
- US-A- 5 785 080

## Beschreibung

Die Erfindung betrifft einen Druckregler mit einem Schließglied, auf dem eine Ventilfeder abgestützt ist, welche mit ihrem anderen Ende gegen eine obere Stirnfläche eines Federtopfes anliegt, und der Mittel zum Kalibrieren der Spannkraft der Ventilfeder aufweist, insbesondere für die Kraftstoffeinspritzung in ein Ansaugsystem eines Kraftfahrzeugs, wobei der Federtopf aus einem Mantelteil und einem Deckel besteht, der Deckel in einer eine gewünschte Federkraft festlegenden Position mit der Mantelfläche des Mantelteils verbunden ist, in das Mantelteil eingeschoben ist und mit einem umgebördelten Rand innenseitig gegen die Mantelfläche anliegt und wobei die Mantelfläche des Mantelteils in den Rand des Deckels greifende Eindrückungen aufweist, dass die Eindrückungen einzelne Lappen aufweisen, welche durch U-förmige Einschnitte in die Mantelfläche und Drücken des von den Einschnitten begrenzten Materials in den Rand des Deckels gebildet sind oder dass die Eindrückungen durch kugelkalottenförmige Ausbuchtungen gebildet sind, wobei die Ausbuchtungen der Mantelfläche des Mantelteils und des Randes ineinander greifen.

Ein Druckregler der vorstehenden Art ist beispielsweise für ein Abgasrückführventil aus der EP 0 314 878 A2 bekannt. Für viele Anwendungsfälle ist es notwendig, dass die Öffnungskraft des Schließgliedes des Druckreglers und damit der von ihm geregelte Druck möglichst exakt und trotz unvermeidlicher Fertigungstoleranzen stets konstant ist. Hierzu dient am Ende der Fertigung ein Kalibriervorgang. Dabei prüft man, bei welchem Druck der Druckregler öffnet und drückt dann zur Einstellung des Druckpunktes die Stirnfläche des Federtopfes mehr oder weniger weit in den Federtopf hinein, so dass die Ventilfeder mehr oder weniger gespannt wird.

Es hat sich jedoch gezeigt, dass sich solche Regler nur aufwendig und mit relativ großen Ungenauigkeiten kalibrieren lassen. Der Grund hierfür liegt primär darin, dass die stirnseitige Eindrückung des Federtopfes nach dem Eindrücken zwangsläufig um einen sich aufgrund von Materialelastizitäten ergebenden Betrag zurückfedert. Man muss deshalb beim Eindrücken den Kalibrierpunkt etwas überfahren und hoffen, dass sich nach dem Zurückfedern der richtige Öffnungsdruck ergibt. Dabei lässt es sich nicht vermeiden, dass die Eindrückung gelegentlich weniger als erwartet zurückfedert und sich dadurch ein hoher Öffnungsdruck einstellt. Ein solcher Fehler lässt sich anschließend nicht mehr durch Nachkalibrieren beheben.

Aus der US 4,646,700 ist weiterhin ein Druckregler bekannt, bei dem der Federtopf aus einem Mantel und einem Deckel besteht. Der Deckel wird in einer vorgesehenen Höhe an dem Mantel befestigt. Die Höhe bestimmt die Vorspannkraft der Ventilfeder und damit des Öffnungsdrucks des Druckreglers. Schwierig gestaltet sich jedoch die Ermittlung der exakten Lage des Deckels und dessen dauerhafte Befestigung in der exakten Lage.

Aus der US 5,785,080 ist ein Druckregler bekannt geworden, bei dem ein Deckel zur Abstützung der Ventilfeder einen in einen Mantel eindringenden Rand hat Auch bei diesem Druckregler gestaltet sich die dauerhafte Befestigung des Deckels in der vorgesehenen Lage sehr schwierig.

Der Erfindung liegt das Problem zugrunde, einen Druckregler der eingangs genannten Art so auszubilden, dass beim Zusammenbau ein möglichst genaues Kalibrieren möglich ist.

Dieses Problem wird erfindungsgemäß dadurch gelöst, dass die Eindrückungen einzelne Lappen aufweisen, welche durch U-förmige Einschnitte in die Mantelfläche und Drücken des von den Einschnitten begrenzten Materials in den Rand des Deckels gebildet sind oder dass die Eindrückungen durch kugelkalottenförmige Ausbuchtungen gebildet sind, wobei die Ausbuchtungen der Mantelfläche des Mantelteils und des Randes ineinander greifen.

Durch diese Gestaltung kann man den Deckel beim Kalibriervorgang axial zum Mantelteil so weit verschieben, bis sich die gewünschte Federkraft einstellt und dann erst den Deckel mit dem Mantelteil verbinden. Da diese Verbindung des Randes des Deckels an der Mantelfläche des Mantelteils erfolgt, ist ein Zurückfedern des Decks nicht zu befürchten, so dass sich die Federkraft sehr genau einstellen lässt. Nach dem Verschieben des Deckels gegen die Federkraft auf die gewünschte Position kann die Befestigung des Deckels mit einem Werkzeug erfolgen, welches beispielsweise Einschnitte für die Laschen erzeugt und die Lappen eindrückt. Entsprechend lassen sich die kalottenförmigen Einbuchtungen einprägen.

Die Erfindung lässt verschiedene Ausführungsformen zu. Zur weiteren Verdeutlichung ihres Grundprinzips sind eine davon und ein abgewandeltes Detail in der Zeichnung dargestellt und werden nachfolgend beschrieben. In ihr zeigen die
- Fig. 1: einen Längsschnitt durch einen Druckregler nach der Erfindung,
- Fig. 2: einen im Maßstab vergrößerten Längsschnitt durch den Verbindungsbereich zwischen einem Mantelteil und Deckel des Druckreglers,
- Fig.3: eine Seitenansicht des Bereichs nach Fig.2,
- Fig.4: einen im Maßstab vergrößerten Längsschnitt durch einen gegenüber Fig.2 abgewandelten Verbindungsbereich.

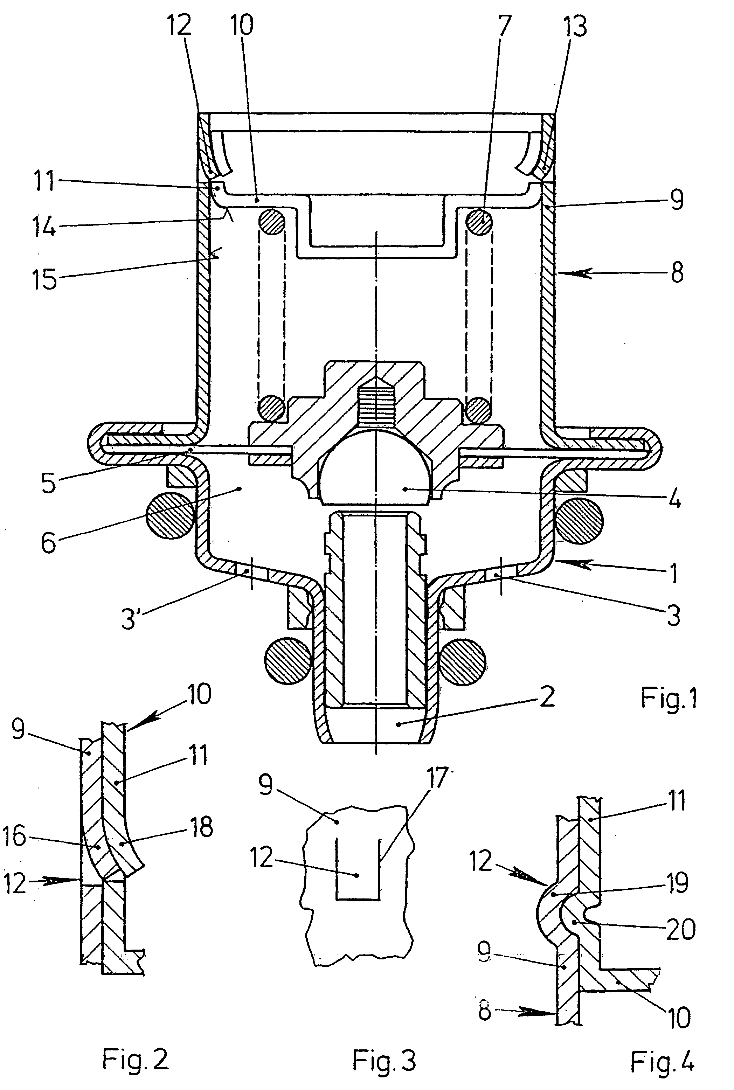

Der in Figur 1 gezeigte Druckregler hat ein Gehäuse 1 mit einem Druckmitteleinlass 2 und mehreren Druckmittelauslässen 3, 3'. Oberhalb des Druckmitteleinlasses 2 ist ein Schließglied 4 angeordnet, welches unterhalb eines festgelegten Druckes diesen Druckmitteleinlass 2 versperrt.

Das Schließglied 4 wird von einer Membran 5 gehalten, die einen Druckraum 6 nach oben hin abschließt. Dieses Schließglied 4 wird durch eine Ventilfeder 7 in Schließrichtung mit einer genau festgelegten Kraft vorgespannt. Die Ventilfeder 7 ist ihrerseits in einem mit dem Gehäuse 1 verbundenen Federtopf 8 angeordnet, der aus einem Mantelteil 9 und einem Deckel 10 besteht. Der Deckel 10 hat einen nach oben gerichteten, an der inneren Mantelfläche 15 des Mantelteils 9 anliegenden Rand 11, der durch mehrere über den Umfang des Mantelteils verteilte Eindrückungen 12, 13 mit der Mantelfläche 15 des Mantelteils 9 verbunden ist. Weiterhin hat der Deckel 10 eine innere Stirnfläche 14, gegen die die Ventilfeder 7 anliegt.

Die Figuren 2 und 3 verdeutlichen, dass die Eindrückungen 12, 13 jeweils einen Lappen 16 aufweisen, der vom Mantelteil 9 in den Rand 11 des Deckels 10 eingreift. Hierzu erhält das Mantelteil 9 jeweils einen u-förmigen Einschnitt 17, was die Figur 3 zeigt. Das Eindrücken der Lappen 16 kann mit demselben Werkzeug erfolgen, mit dem auch die Einschnitte 17 gebildet werden. Ein solches Werkzeug drückt mit dem Lappen 16 zugleich einen entsprechenden Lappen 18 des Randes 11 nach innen.

Die Figur 4 zeigt, dass die Eindrückungen 12 bzw. 13 auch durch kugelkalottenförmige, ineinander greifende Ausbuchtungen 19, 20 des Deckels 10 und der Wandung des Mantelteils 9 gebildet sein können.

## Patentansprüche

1. Druckregler mit einem Schließglied (4), auf dem eine Ventilfeder (7) abgestützt ist, welche mit ihrem anderen Ende gegen eine obere Stirnfläche eines Federtopfes (8) anliegt, und der Mittel zum Kalibrieren der Spannkraft der Ventilfeder (7) aufweist, insbesondere für die Kraftstoffeinspritzung in ein Ansaugsystem eines Kraftfahrzeugs, wobei der Federtopf (8) aus einem Mantelteil (9) und einem Deckel besteht, der Deckel (10) in einer eine gewünschte Federkraft festlegenden Position mit der Mantelfläche (15) des Mantelteils (9) verbunden ist, in das Mantelteil (9) eingeschoben ist und mit einem umgebördelten Rand (11) innenseitig gegen die Mantelfläche (15) anliegt und wobei die Mantelfläche (15) des Mantelteils (9) in den Rand (11) des Deckels (10) greifende Eindrückungen (12, 13) aufweist, **dadurch gekennzeichnet, dass** die Eindrückungen (12, 13) einzelne Lappen (16) aufweisen, welche durch U-förmige Einschnitte (17) in die Mantelfläche (15) und Drücken des von den Einschnitten (17) begrenzten Materials in den Rand (11) des Deckels (10) gebildet sind oder dass die Eindrückungen (12) durch kugelkalottenförmige Ausbuchtungen (19, 20) gebildet sind, wobei die Ausbuchtungen (19) der Mantelfläche (15) des Mantelteils (9) und des Randes (11) ineinander greifen.

## Claims

1. Pressure regulator with a closing member (4), on which is supported a valve spring (7) which bears with its other end against an upper end face of a spring cup (8), the said closing member having means for calibrating the tension force of the valve spring (7), in particular for the injection of fuel into an intake system of a motor vehicle, the spring cup (8) consisting of a casing part (9) and of a cover, the cover (10) being connected to the surface area (15) of the casing part (9) in a position defining a desired spring force, being pushed into the casing part (9) and bearing on the inside, with a crimped edge (11), against the surface area (15), and the surface area (15) of the casing part (9) having indentations (12, 13) engaging into the edge (11) of the cover (10), **characterized in that** the indentations (12, 13) have individual tabs (16) which are formed by means of U-shaped incisions (17) into the surface area (15) and by the pressing of the material delimited by the incisions (17) into the edge (11) of the cover (10), or **in that** the indentations (12) are formed by protuberances (19, 20) in the form of a spherical cap, the protuberances (19) of the surface area (15) of the casing part (9) and of the edge (11) engaging one into the other.

## Revendications

1. Régulateur de pression comportant un élément d'obturation (4), sur lequel s'appuie un ressort de soupape (7) dont l'autre extrémité s'applique contre la face frontale supérieure d'un pot du ressort (8), et comportant des moyens permettant de calibrer la tension du ressort de soupape (7), destiné notamment à l'injection de carburant dans un système d'aspiration d'un véhicule automobile, le pot du ressort (8) se composant d'une enveloppe (9) et d'un couvercle, le couvercle (10) étant fixé, dans une position définissant une tension du ressort souhaitée, à la surface (15) de l'enveloppe (9), étant inséré dans l'enveloppe (9) et s'appliquant par une bordure de sertissage (11) à l'intérieur de l'enveloppe (15) et la surface (15) de l'enveloppe (9) comportant des enfoncements (12, 13) qui s'engagent dans la bordure (11) du couvercle (10), **caractérisé par le fait que** les enfoncements (12, 13) comportent des languettes isolées (16), formées par des entailles (17) en forme de U dans la surface (15) de l'enveloppe et par enfoncement du matériau limité par les entailles (17) dans la bordure (11) du couvercle (10) et que les enfoncements (12) sont formés par des courbures (19, 20) en forme de calottes sphériques, les courbures (19) de la surface (15) de l'enveloppe (9) et de la bordure (11) s'engageant l'une dans l'autre.
